# EUROPÄISCHE PATENTSCHRIFT

(11) **EP 2 317 182 B1**
(45) Veröffentlichungstag und Bekanntmachung des Hinweises auf die Patenterteilung: **04.07.2012**
(21) Anmeldenummer: 10177755.5
(22) Anmeldetag: 21.09.2010
(51) Int. Cl.: F16H 57/04, F16N 7/18, F16N 7/36

(54) **Schmiervorrichtung für Getriebe**
Lubricating device for gearbox
Dispositif de lubrification pour boîte de vitesses

(30) Priorität: 28.10.2009 DE 102009051004
(43) Veröffentlichungstag der Anmeldung: 04.05.2011
(73) Patentinhaber: Schaeffler Technologies AG & Co. KG, 91074 Herzogenaurach (DE)
(72) Erfinder: Smetana, Tomas, 91074, Herzogenaurach (DE)

(56) Entgegenhaltungen:
- EP-A1- 0 224 740
- DE-B- 1 273 914
- DE-C- 812 749
- DE-C- 944 037
- US-A- 3 364 776
- US-A- 4 964 489

## Beschreibung

### Gebiet der Erfindung

Die Erfindung betrifft eine Schmiervorrichtung für Getriebe mit zumindest einem um eine Drehachse umlaufenden Ölverteiler, der mit Schmieröl befüllbar ist und der mit wenigstens einer Austrittsöffnung versehen ist, wobei durch die Austrittsöffnung das Schmieröl durch Fliehkraft verteilbar ist.

### Hintergrund der Erfindung

Eine derartige Schmiervorrichtung ist in DE 812 749 C1 beschrieben. In einem Planetengetriebe mit Innenzahnkranz laufen Planetenzahnräder ab. Zwischen den Planetenzahnrädern sind als Öltaschen bezeichnete Ölverteiler an einem Planetenträger angeordnet. Die Ölverteiler laufen mit den Planetenrädern um die Drehachse um und schöpfen aus einem Ölsumpf Schmieröl, das infolge der Fliehkraft durch eine Austrittsöffnung gegen den Innenzahnkranz gespritzt wird.

### Beschreibung der Erfindung

Die Aufgabe der Erfindung ist es, eine Schmiervorrichtung zu schaffen, mit der Öl effektiv verteilt wird und Verluste, insbesondere Planschverluste bei Tauchschmierung vermieden oder so gering wie möglich gehalten werden können.

Diese Aufgabe ist mit dem Gegenstand des Anspruchs 1 gelöst. Danach weist die erfindungsgemäße Schmiervorrichtung wenigstens einen Ölverteiler mit einem Volumen an verteilbarem Schmieröl auf, das pro Umdrehung mit wenigstens einer definierten Drehzahl um die Drehachse einmal befüllbar und noch während der gleichen Umdrehung einmal über die Austrittsöffnung entleerbar ist.

Demnach sind das Fassungsvermögen an Schmieröl und der Durchlassquerschnitt der Austrittsöffnung so ausgelegt, dass diese geeignet sind, während einer vom Anwender gezielt gewählten Drehzahl mit einer Befüllung genug Schmieröl aufzunehmen, dass es zum Verteilen für eine Umdrehung ausreicht und bis zum Ende dieser Umdrehung wieder entleert ist. Mit Beginn der nächsten Umdrehung wiederholt sich der Vorgang usw..

Der Querschnitt der Austrittsöffnung ist von der auf das Schmieröl wirkenden Fliehkraft, von der Dichte bzw. Viskosität des Schmieröls, von der Temperatur und von der Menge des pro Umdrehung zu verteilenden Schmieröls abhängig. Der Ölverteiler ist vorzugsweise durch Eintauchen und Schöpfen aus einem Ölsumpf befüllbar. Denkbar ist auch, dass dem Ölverteiler das Schmieröl zugeleitet wird.

Der Vorteil der Erfindung liegt darin, dass die Menge des verteilten Schmieröls und dessen Verteilung nicht mehr zufällig gestaltet ist, sondern optimal an extreme Betriebsbedingungen angepasst werden kann. Es wird nur soviel Schmieröl in den Ölverteilern pro Umdrehung mitgenommen, wie für die tatsächliche Schmierung unter den extremen Bedingungen, beispielsweise bei hohen Drehzahlen notwendig ist. Fliehkräfte und Planschverluste werden deshalb gering gehalten, weil keine überflüssigen Mengen an Schmieröl mitgeschleppt werden.

Eine Ausgestaltung der Erfindung sieht vor, dass die Schmiervorrichtung mehrere der Ölverteiler aufweist. Der Vorteil dieser Anordnung liegt darin, dass die Menge/das Volumen des zu verteilenden Schmieröls ohne einseitige Massenkräfte zu erzeugen erhöht werden kann, in dem diese auf mehrere Ölverteiler aufgeteilt werden können. Außerdem kann damit gleichzeitig die Masse des pro Umdrehung zu verteilenden Schmieröls gleichmäßig am Umfang um die Drehachse verteilt werden.

Darüber hinaus sieht eine Ausgestaltung der Erfindung vor, dass jeder der Ölverteiler bei der gleichen definierten Drehzahl einmal pro Umlauf entleerbar ist. Bei einer Tauchschmierung schöpfen die Ölverteiler nacheinander das Schmieröl und geben dieses nacheinander jeder pro Umlauf ab, so dass eine kontinuierliche Ölverteilung abgesichert ist - insbesondere dann, wenn mehrere der Ölverteiler gleichmäßig am Umfang verteilt angeordnet sind. Es ist jedoch auch denkbar, dass in der Schmiervorrichtung mehrere Ölverteiler mit zueinander unterschiedlicher Verteilungscharakteristik angeordnet sind. Gruppen von Ölverteilern oder einzelne Ölverteiler sind dann beispielsweise hinsichtlich des befüllbaren Volumens und der Austrittsöffnungen an jeweils eine andere vorbestimmte Betriebsdrehzahl angepasst nach den Merkmalen des Anspruchs 1 ausgelegt. In diesem Fall kann die Ölverteilung für mehrere Betriebszustände optimal gestaltet werden.

Eine weitere Ausgestaltung der Erfindung sieht vor, dass der oder die Ölverteiler mit mehr als einer der Austrittsöffnungen versehen ist/sind. Die Austrittsöffnungen sind so ausgelegt, dass der zur Entleerung des Volumens pro Umlauf notwendige Volumenstrom gleichmäßig auf alle Austrittsöffnungen aufgeteilt ist. Alternativ sind die Querschnitte der Austrittsöffnungen unterschiedlich.

Zugleich oder alternativ zu den oben genannten Ausführungen sind die Ölverteiler oder die Austrittsöffnungen innerhalb eines Ölverteilers oder die Austrittsöffnungen von Ölverteiler zu Ölverteiler mit unterschiedlichem radialem Abstand zur Drehachse angeordnet. Dadurch sind die Volumenströme beliebig regelbar und können unterschiedlichen Betriebszuständen angepasst werden.

Der oder die Ölverteiler können Bestandteil eines Getriebebauteils, beispielsweise eines Planetenträgers sein oder sind als Einzelteil an diesem befestigt. Alternativ sind die Ölverteiler an einer gesonderten Scheibe angeordnet, die separat auf einer rotierenden Welle sitzt, oder an einem Zahnrad oder Planetenträger des Getriebes befestigt.

### Detaillierte Beschreibung der Zeichnung

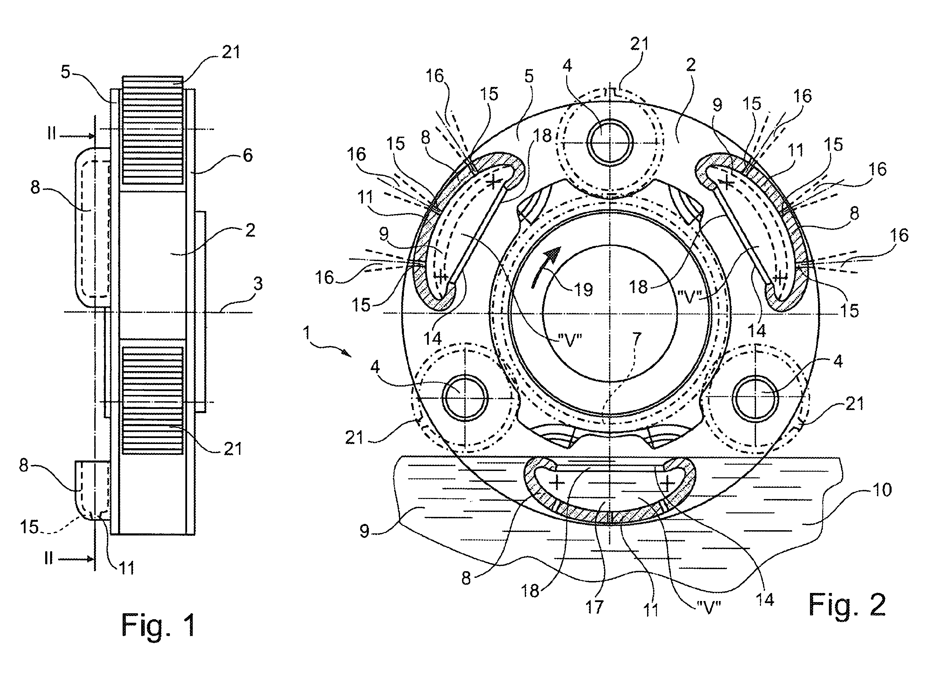

Figur 1 zeigt eine Schmiervorrichtung 1 für ein nicht vollständig dargestelltes Getriebe 2. Figur 2 zeigt das Getriebe 2 in einer Schnittdarstellung entlang der Linie II - II nach Figur 1. Das Getriebe 2 ist ein Planetengetriebe mit Planeten 21, die auf Planetenbolzen 4 drehbar an Planetenträgern 5 und 6 gelagert sind und im Zahneingriff mit einem Sonnenrad 7 stehen. Die Schmiervorrichtung 1 weist drei um die Drehachse 3 umlaufende Ölverteiler 8 auf, die mit gleichmäßiger Teilung und mit gleichem radialen Abstand zur Drehachse 3 an dem Planetenträger 5 beispielsweise mittels einer Schnappverbindung befestigt sind. Die Ölverteiler 8 sind in diesem Fall aus Kunststoff, können jedoch auch aus Metall sein.

Jeder Ölverteiler 8 ist schalenförmig ausgebildet und weist einen radial von der Drehachse 3 weg weisenden Boden 11 sowie Seitenränder auf. In dem Boden 11 sind Austrittsöffnungen 15 in Form von Durchgangslöchern, die auch Schlitze sein können, ausgebildet. Eine Schöpföffnung 14 ist auf die Drehachse 3 gerichtet. Über die jeweilige Schöpföffnung 14 ist der Ölverteiler 8 mit Schmieröl 9 aus einem Ölsumpf 10 befüllbar. Bei Rotation der Planetenträger 5 und 6 um die Drehachse 3 in Richtung des Pfeils 19 zwingen Fliehkräfte das Schmieröl 9 durch die Austrittsöffnungen 15, so dass das Schmieröl 9 in Form von Strahlen 16 oder als Ölnebel verteilt wird.

Der jeweilige Ölverteiler 8 weist ein mit dem Schmieröl 9 befüllbares Volumen "V", das durch das Fassungsvermögen der Schale 17 des Ölverteilers 8 bis an den Rand 18 bestimmt ist. Das Volumen "V" entspricht einem Volumen, das so groß ist, dass dieses bei wenigstens einer definierten Umlaufdrehzahl um die Drehachse 3 pro Umlauf einmal mit Schmieröl 9 befüllbar und während des gleichen Umlaufs einmal über die drei Austrittsöffnungen 15 eines Ölverteilers 8 entleerbar ist.

Zum Befüllen des jeweiligen Ölverteilers 8 läuft das Planetengetriebe um die Drehachse 3 um. Dabei umkreisen die Ölverteiler 8 die Drehachse 3. Die die Ölverteiler 8 tauchen pro Umdrehung einmal in den Ölsumpf 10 ein und werden durch Schöpfen über die Schöpföffnung 14 aus dem Ölsumpf 10 befüllt.

## Patentansprüche

1. Schmiervorrichtung (1) für Getriebe (2) mit zumindest einem um eine Drehachse (3) umlaufenden Ölverteiler (8), der mit Schmieröl (9) befüllbar ist und der mit wenigstens einer Austrittsöffnung (15) versehen ist, wobei durch die Austrittsöffnung (15) das Schmieröl (9) durch Fliehkraft verteilbar ist, **dadurch gekennzeichnet, dass** der Ölverteiler (8) ein mit Schmieröl (9) befüllbares Volumen (V) aufweist, das so groß ist, dass dieses bei wenigstens einer definierten Umlaufdrehzahl um die Drehachse (3) pro Umlauf einmal mit Schmieröl (9) befüllbar und während des gleichen Umlaufs einmal über die Austrittsöffnung (15) entleerbar ist.

2. Schmiervorrichtung (1) nach Anspruch 1 mit einem Ölsumpf (10), **dadurch gekennzeichnet, dass** der Ölverteiler (8) über wenigstens eine Schöpföffnung (14) aus dem Ölsumpf (10) befüllbar ist.

3. Schmiervorrichtung nach Anspruch 1, **dadurch gekennzeichnet, dass** die Schmiervorrichtung (1) mehrere der Ölverteiler (8) aufweist.

4. Schmiervorrichtung nach Anspruch 3, **dadurch gekennzeichnet, dass** die Ölverteiler (8) gemeinsam in Umfangsrichtung der Drehachse (3) zueinander benachbart angeordnet sind, wobei die Ölverteiler (8) voneinander so getrennt sind, dass wenigstens jeder der Ölverteiler (8) bei einer definierten Umlaufdrehzahl um die Drehachse (3) pro Umlauf einmal mit Schmieröl (9) befüllbar und während des gleichen Umlaufs einmal über die Austrittsöffnung (15) entleerbar ist.

5. Schmiervorrichtung nach Anspruch 4, **dadurch gekennzeichnet, dass** die Ölverteiler (8) bei der gleichen definierten Umlaufdrehzahl um die Drehachse (3) pro Umlauf einmal mit Schmieröl (9) befüllbar und entleerbar sind.

6. Schmiervorrichtung nach Anspruch 1, **dadurch gekennzeichnet, dass** der Ölverteiler (8) mehr als eine Austrittsöffnung (15) aufweist, wobei der Ölverteiler (8) während des Umlaufs bei der definierten Drehzahl einmal über wenigstens eine der Austrittsöffnungen (15) entleerbar ist.

7. Schmiervorrichtung nach Anspruch 6, **dadurch gekennzeichnet, dass** der Ölverteiler (8) während des Umlaufs bei der definierten Drehzahl über die Austrittsöffnungen (15) entleerbar ist.

## Claims

1. Lubricating device (1) for a gearbox (2), having at least one oil distributor (8) which rotates about an axis of rotation (3) and which can be filled with lubricating oil (9) and which is provided with at least one outlet orifice (15), wherein the lubricating oil (9) can be distributed through the outlet orifice (15) by centrifugal force, **characterized in that** the oil distributor (8) has a volume (V) which can be filled with lubricating oil (9) and which is of such a size that, at at least one defined rotational speed about the axis of rotation (3), said volume can be filled with lubricating oil (9) once per revolution and, during the same revolution, evacuated once via the outlet orifice (15).

2. Lubricating device (1) according to Claim 1 having an oil sump (10), **characterized in that** the oil distributor (8) can be filled from the oil sump (10) via at least one scoop orifice (14).

3. Lubricating device according to Claim 1, **characterized in that** the lubricating device (1) has multiple oil distributors (8).

4. Lubricating device according to Claim 3, **characterized in that** the oil distributors (8) are arranged adjacent to one another jointly in the circumferential direction about the axis of rotation (3), wherein the oil distributors (8) are separated from one another such that, at at least one defined rotational speed about the axis of rotation (3), at least each of the oil distributors (8) can be filled with lubricating oil (9) once per revolution and, during the same revolution, evacuated once via the outlet orifice (15).

5. Lubricating device according to Claim 4, **characterized in that** the oil distributors (8) can be filled with lubricating oil (9) once per revolution, and evacuated once per revolution, at the same defined rotational speed about the axis of rotation (3).

6. Lubricating device according to Claim 1, **characterized in that** the oil distributor (8) has more than one outlet opening (15), wherein, at the defined rotational speed, the oil distributor (8) can be evacuated once during the revolution via at least one of the outlet openings (15).

7. Lubricating device according to Claim 6, **characterized in that**, at the defined rotational speed, the oil distributor (8) can be evacuated during the revolution via the outlet openings (15).

## Revendications

1. Dispositif de lubrification (1) pour boîtes de vitesses (2), comprenant au moins un distributeur d'huile (8) tournant autour d'un axe de rotation (3), qui peut être rempli d'huile de lubrification (9) et qui est pourvu d'au moins une ouverture de sortie (15), l'huile de lubrification (9) pouvant être distribuée par la force centrifuge à travers l'ouverture de sortie (15), **caractérisé en ce que** le distributeur d'huile (8) présente un volume (V) pouvant être rempli d'huile de lubrification (9), lequel volume a une taille telle qu'il puisse être rempli d'huile de lubrification (9) une fois par rotation dans le cas d'au moins une vitesse de rotation périphérique définie autour de l'axe de rotation (3), et qu'il puisse être vidé pendant la même rotation une fois par le biais de l'ouverture de sortie (15).

2. Dispositif de lubrification (1) selon la revendication 1, comprenant un carter d'huile (10), **caractérisé en ce que** le distributeur d'huile (8) peut être rempli par le biais d'au moins une ouverture de vidage (14) à partir du carter d'huile (10).

3. Dispositif de lubrification selon la revendication 1, **caractérisé en ce que** le dispositif de lubrification (1) présente plusieurs distributeurs d'huile (8).

4. Dispositif de lubrification selon la revendication 3, **caractérisé en ce que** les distributeurs d'huile (8) sont disposés les uns à côté des autres ensemble dans la direction périphérique de l'axe de rotation (3), les distributeurs d'huile (8) étant séparés les uns des autres de telle sorte qu'au moins chacun des distributeurs d'huile (8), dans le cas d'une vitesse de rotation périphérique définie autour de l'axe de rotation (3), puisse être rempli une fois par rotation avec de l'huile de lubrification (9) et puisse être vidé pendant la même rotation une fois par le biais de l'ouverture de sortie (15).

5. Dispositif de lubrification selon la revendication 4, **caractérisé en ce que** les distributeurs d'huile (8), dans le cas de la même vitesse de rotation périphérique définie autour de l'axe de rotation (3) peuvent être remplis et vidés une fois par rotation avec de l'huile de lubrification (9).

6. Dispositif de lubrification selon la revendication 1, **caractérisé en ce que** le distributeur d'huile (8) présente plus d'une ouverture de sortie (15), le distributeur d'huile (8) pouvant être vidé une fois pendant la rotation dans le cas de la vitesse de rotation définie, par le biais d'au moins l'une des ouvertures de sortie (15).

7. Dispositif de lubrification selon la revendication 6, **caractérisé en ce que** le distributeur d'huile (8) peut être vidé pendant la rotation dans le cas de la vitesse de rotation définie, par le biais des ouvertures de sortie (15).
